# FASCICULE DE BREVET EUROPEEN

(11) **EP 3 745 867 B1**
(45) Date de publication et mention de la délivrance du brevet: **12.11.2025**
(21) Numéro de dépôt: 19704561.0
(22) Date de dépôt: 31.01.2019
(51) Int. Cl.: A21D 8/04

(54) **LEVAIN ET SON PROCEDE DE PRODUCTION**
SAUERTEIG UND VERFAHREN ZUR HERSTELLUNG DAVON
SOURDOUGH AND PROCESS FOR PRODUCING SAME

(30) Priorité: 31.01.2018 FR 1870101
(43) Date de publication de la demande: 09.12.2020
(73) Titulaire: Philibert, Pascal, 01750 Replonges (FR)
(72) Inventeur: Philibert, Pascal, 01750 Replonges (FR)
(74) Mandataire: Cabinet Didier Martin
(86) Numéro de dépôt international: PCT/EP2019/052418
(87) Numéro de publication internationale: WO 2019/149839

(56) Documents cités:
- WO-A1-99/66801
- CN-A- 104 757 043
- FR-A1- 2 553 789
- FR-A1- 2 687 544
- NIONELLI LUANA ET AL: "Exploitation of Albanian wheat cultivars: Characterization of the flours and lactic acid bacteria microbiota, and selection of starters for sourdough fermentation", FOOD MICROBIOLOGY, ACADEMIC PRESS LTD, LONDON, GB, vol. 44, 2 June 2014 (2014-06-02), pages 96 - 107, XP029007831, ISSN: 0740-0020, DOI: 10.1016/J.FM.2014.05.011
- FOSCHINO R ET AL: "MICROBIAL CHARACTERIZATION OF SOURDOUGHS FOR SWEET BAKED PRODUCTS", ITALIAN JOURNAL OF FOOD SCIE, PINEROLO, IT, vol. 11, no. 1, 1 January 1999 (1999-01-01), pages 19 - 28, XP008048868, ISSN: 1120-1770
- SPICHER G ET AL: "Untersuchungen zur Charakterisierung und Bewertung verschiedener Verfahren zur Bereitung eines Spontansauers. II. Einfluss der Fuehrungsbedingungen auf den Verlauf der spontanen Gaerung", GETREIDE MEHL UND BROT, BOCHUM, DE, vol. 41, no. 12, 1 January 1987 (1987-01-01), pages 372 - 376, XP009508171, ISSN: 0367-4177

## Description

La présente invention se rapporte aux levains et à leurs procédés de production.

Le levain est un produit traditionnel obtenu à partir d'une fermentation naturelle acidifiante de farine et d'eau. Le levain ainsi obtenu renferme une microflore vivante et métaboliquement active composée majoritairement de bactéries lactiques et de levures. Mis en œuvre en panification, il a pour fonction d'assurer la levée de la pâte et son acidification. En France, le levain est défini dans l'article 4 du décret No. 93-1074 du 13 septembre 1993 ainsi que les caractéristiques attendues du pain au levain.

Le levain est reconnu pour l'arôme et l'odeur typiques qu'il confère au pain marqué par des notes acidulées. Cette fonctionnalité d'acidification du levain affecte également l'ensemble des attributs organoleptiques (texture de la mie plus grasse, alvéolage irrégulier, une croûte plus épaisse et plus croustillante), améliore la conservation du pain et favorise la biodisponibilité des minéraux (dégradation du phytate en milieu acide).

Le levain se distingue clairement de la levure de boulanger, issue de la sélection et de la multiplication de souches de levures principalement du genre *Saccharomyces,* dont la fonction essentielle est de faire lever tous types de pâte. Chaque levure est spécifiquement sélectionnée pour des applications précises (pâte normale, sucrée, acide, réfrigérée, congelée...). La levure de boulanger ne permet pas de faire du pain au levain, car elle ne produit pas les acides organiques requis. Au contraire, le levain présente une activité de levée de la pâte moindre que la levure, mais sa microflore lactique produit plusieurs acides, notamment l'acide acétique du pain au levain. La panification avec du levain nécessite alors des temps de levée de la pâte plus longs que ceux de la levure de boulanger et induit obligatoirement l'acidification de la pâte. L'utilisation du levain est donc généralement inadaptée, et remplacée par la levure de boulanger, pour fabriquer par exemple du pain courant ou des pâtes sucrées comme la brioche dont la durée de levée de la pâte est courte et dont les produits finaux ne doivent pas être acides.

Un procédé de panification direct est un procédé dont la fermentation de la pâte n'est jamais bloquée par réfrigération entre le début du pétrissage et la fin de la cuisson. Les procédés de panification différés ont à l'inverse une phase de réfrigération pour bloquer la fermentation, ce qui permet de moduler plus facilement l'organisation du travail du boulanger. Un procédé de panification court présente des temps de fermentation de la pâte d'une durée inférieure à 6 h alors qu'un procédé long nécessite des temps de fermentation de la pâte supérieure à 6 h.

Le document WO-99/66801A1 décrit un procédé de production de levain naturel liquide mettant en œuvre une fermentation entre 10 et 16°C durant au moins environ 15h. Le document FR-2687544A1 décrit un procédé dans lequel on prépare le levain à partir de levures naturelles de fruits. Le document « Exploitation of Albanian wheat cultivars : Characterization of the flours and lactic acid bacteria microbiota, and selection of starters for sourdough fermentation », Nionelli Luana et al., Food Microbiology, Academic Press Ltd, Mondon, GB, Vol. 44, 2 juin 2014, pages 96-107, décrit la caractérisation de variétés de blé pour la fabrication de pain, et la préparation de levains. Le document « Microbial characterization of sourdoughs for sweet baked products », Foschino R et al., Italian Journal of Food Sciences, Pinerolo, IT, vol. 11, no. 1, 1er janvier 1999, pages 19-28, décrit la préparation de pâtes à partir de levain pour fabriquer des gâteaux italiens. Le document « Untersuchungen zur Charakterisierung und Bewertung verschiedener Verfahren zur Bereitung eines Spontansauers. II. Einfluss der Fuehrungsbedingungen auf den verlauf der spontanen Gaerung », Spicher G et al., Getreide Mehl und Brot, Bochum, DE, vol. 41, no. 12, 1er janvier 1987, pages 372-376, décrit la fabrication de levains. Le document FR-2553789A1 décrit un procédé de fabrication de levain avec un séchage par atomisation. Le document CN-104 757 043 A décrit un procédé de préparation d'une pâte à partir de levure naturelle.

L'invention a pour objet un levain et son procédé d'obtention capable de faire lever, sans ajout de levure, tous types de pâtes et dans un perfectionnement de fermenter également la pâte d'un pain au levain. Les levains obtenus selon l'invention sont conformes à la réglementation française et se distinguent par leur large éventail d'utilisation sans avoir recours à l'ajout de levure de boulanger. Ils peuvent être utilisés aussi bien sur des procédés de panification directs ou différés, courts ou longs, favorisant la levée de la pâte sans amener d'acidité dans le produit final ou pour fabriquer du pain au levain conforme à la réglementation française avec un pH < 4.3 et un taux d'acétates > 900ppm (pour le levain perfectionné selon l'invention).

Les levains commerciaux actuellement sur le marché ne présentent pas une telle flexibilité d'utilisation. Les levains proposés ne sont pas suffisamment performants pour faire lever les pâtes normales ou sucrées avec des procédés de panification courts.

De plus, pour l'application pain au levain selon la réglementation française, les levains commerciaux actuels contiennent de fortes teneurs en acides organiques, ce qui ralentit fortement l'activité métabolique des microorganismes qu'ils renferment. Ces levains apportent alors massivement les acides requis, mais ont une activité fermentaire moindre durant la panification autant au niveau de l'acidification que de la levée de la pâte, ils nécessitent alors généralement l'ajout de levure de boulanger. Le levain perfectionné selon l'invention est remarquable car il est relativement peu acide mais possède une microflore métaboliquement active qui produit les acides organiques de manière endogène pendant la panification et qui fait lever la pâte sans ajout de levure.

Au niveau du procédé d'obtention, la présente invention décrit un procédé entièrement naturel basé sur une fermentation spontanée des microorganismes présents sur les substrats fermentescibles et dirigée par des paramètres physiques, contrairement au procédé de fabrication de la levure de boulanger qui requiert l'ajout de nutriments et de produits chimiques tels que du phosphate d'ammonium et des antimoussants ou contrairement à d'autres procédés d'obtention de levains ensemencés avec des starters microbiens sélectionnés et cultivés sur milieux nutritifs synthétiques.

L'invention vise un levain qui permet de faire, sans ajout de levure, tous types de pain, de brioche, de panettone et toutes productions de pâtes levées, levées feuilletées qui nécessitent une phase de fermentation. Il permet aussi suivant un perfectionnement de fabriquer du pain au levain avec une moindre quantité de levain que les levains antérieurs.

Dans le procédé de production d'un levain suivant l'invention, successivement :
a) on nettoie une matrice fermentescible à l'eau en l'immergeant complètement dans de l'eau et en faisant s'écouler de l'eau jusqu'à ce que l'eau qui s'écoule soit limpide, de manière à obtenir une matrice nettoyée, ou bien contenant encore de 200 g à 1,5 Kg d'eau résiduelle par 2 Kg de matrice que l'on incube ou bien en contenant moins et, dans ce dernier cas, on immerge la matrice nettoyée dans de l'eau entre 10 et 35°C à raison de 1 à 20 Kg d'eau par 2 Kg de matrice que l'on incube, l'incubation se faisant entre 10 et 35° C jusqu'à apparition de bulles à la surface du liquide (dit jus), de manière à obtenir une matrice incubée,
b) on sépare le jus du reste de la matrice incubée,
c) on mélange le jus à du substrat pour obtenir un mélange ayant une teneur en matière sèche en poids comprise entre 15 et 60% et on laisse fermenter pendant 12 à 72 h entre 9 et 30°C pour obtenir un milieu et
d) on ajoute, au milieu du substrat et de l'eau entre 10 et 35°C, l'apport de substrat et d'eau représentant de 25 à 75% du volume total pour obtenir du produit et on laisse fermenter entre 9 et 30°C avec insufflation d'air, d'oxygène ou d'un mélange de gaz contenant de l'oxygène. On peut injecter de l'air de qualité alimentaire par tout système qui permet de diffuser l'air en fond de cuve à un débit variant de 0,01 de produit à 10 m3/h/kg de produit, de préférence à un débit compris entre 0,01 et 1 m3/h/kg de produit, pour obtenir du levain,
et dans lequel l'insufflation d'air ou d'oxygène n'a lieu qu'au stade d).

Il est déterminant de n'insuffler de l'air ou de l'oxygène qu'au stade d).

De préférence, on peut faire suivre le stade d) d'un stade e), dans lequel on répète le stade d), mais avec une teneur en matière sèche allant de 30 à 60% en poids. De préférence, on répète le stade e) au moins trois fois. La matrice fermentescible est une matière qui contient des flores microbiennes naturellement, dont notamment des bactéries lactiques et des levures. Cette matrice peut être, notamment :
- des céréales (blé tendre, blé dur, seigle par exemple), des pseudo-céréales (sarrasin, quinoa par exemple), des légumineuses ; et sous toutes leurs formes (graines entières sèches ou germées, farines, semoules et autres fractions (les sons, germes par exemple)),
- tous les fruits (pomme, poire, banane, raisin par exemple) et les fruits secs, entiers ou parties (peau, chair, pulpe, pépins) frais et transformés tels que séchés,
- bois de la vigne (sarment, copeaux...),
- choux, houblons, malts (blé, orge par exemple)

Le substrat peut être de la farine ou toute autre fraction de céréale ou pseudo-céréale ou légumineuse.

Le procédé permet d'obtenir un levain ayant un pH compris entre 3 et 6, une acidité totale titrable inférieure à 20, un taux d'acide acétique inférieur à 2 000 ppm, un taux d'acide lactique inférieur à 8 000 ppm, un taux de levures en log(ufc)/g compris entre 7 et 9, un taux de bactéries lactiques en log(ufc)/g compris entre 8 et 10 et qui, utilisé en boulangerie dans un procédé de préparation de pain selon les stades successifs suivants : on introduit dans l'ordre, dans un pétrin à spirale à bras et cuve entraînés en rotation, 1275 g d'eau, 2000 g de farine et 200g de levain. On les pétrit pendant 5 min à une vitesse de 70 t/min du bras et de 10 t/min de la cuve. On introduit 40 g de sel dans le pétrin. On pétrit pendant 3 min à une vitesse de 160 t/min du bras et 18 t/min de la cuve, de manière à obtenir une température de la pâte en sortie de pétrissage de 25 à 27°C. On effectue un pointage de la pâte pendant 1 heure en chambre de fermentation à 25°C et à une hygrométrie de 75%. On effectue une division manuelle de la pâte en pâtons de 350 g que l'on préforme en boules ovales. On détend pendant 20 min en chambre de fermentation à 25°C et à une hygrométrie de 75%. On effectue un façonnage en format bâtard ou baguette avec soudure dessus. On effectue un apprêt de 4 à 5h en chambre de fermentation à 25°C et à une hygrométrie de 75% et enfin une cuisson pendant 20 min à 240°C avec injection de buée à l'enfournement, donne une pâte avant cuisson ayant une mesure de pousse à 5 h en cm supérieure à 2 et à 6 h supérieure à 2,8 et cette pâte donne un pain qui a un volume massique au moins égal à 3cm³/g et, de préférence, un taux d'acétate supérieur à 900 ppm et un pH supérieur à 4,3 dans un procédé de fabrication de pain au levain.

Pour fabriquer du pain ordinaire, on utilise de 5 à 40%, de préférence de 10 à 15%, du levain par rapport au poids de la farine.

Pour fabriquer du pain au levain, on utilise de 0,5 à 5%, de préférence de 1 à 3%, de levain par rapport au poids de la farine.

Le pH et l'acidité totale titrable (ATT) sont mesurés à partir des échantillons de levain frais. Dix grammes de levain sont mélangés à 90 ml d'eau distillée à l'aide d'un agitateur magnétique pendant 5 min. La mesure du pH est effectuée sur ce mélange, sous agitation, avec un pHmètre Mettler Toledo (marque de fabrique) modèle G20. La mesure de l'ATT (acidité totale titrable) est réalisée sous agitation par titration à la soude 0,1 mol/l (mole par litre) jusqu'à l'obtention d'un pH de 8,5. L'ATT est définie comme le volume (en ml) de solution de NaOH à 0,1 mol/l nécessaire pour atteindre 8,5 de pH.

La matière sèche (MS) des levains est mesurée par méthode infrarouge avec un dessiccateur halogène Radwag (marque de fabrique) modèle MAC 50/1. Les échantillons de levain sont frais. Les mesures sont réalisées en triple sur 2,0 ± 0,1 g de levain, puis moyennées. Le programme d'analyse applique une température de 130°C jusqu'à ce que la variation de la valeur de pesée soit ≤ 1mg en 25s. Les valeurs sont exprimées en pourcentage de MS contenue dans le levain.

Les taux d'acide lactique et d'acide acétique sont mesurés par méthode enzymatique au moyen des kits D-/L-Lactic acid ENZYTEC^{™} et acetic acid ENZYTEC^{™} (Scil Diagnostic GmbH, Allemagne). Les échantillons de levain sont frais, homogénéisés et dilués au 100^{ème}, puis centrifugés à 12 000 g pendant 20 minutes. Le surnageant est prélevé. L'analyse est effectuée à partir de cet échantillon. Les résultats sont exprimés en ppm (parties par million = mg/kg).

Le taux de levures a été déterminé selon la norme de référence AFNOR NF V08-059, méthode de routine, de la manière suivante :
L'ensemencement se fait en surface sur gélose glucosée au chloramphénicol (Biokar (marque de fabrique)) préalablement coulée dans des boîtes de pétri avec une quantité déterminée de suspension mère et/ou des dilutions décimales de l'échantillon. Le dénombrement s'effectue après incubation des boîtes en aérobiose à 25+/-1°C pendant 5 jours. Le résultat est exprimé en logarithme décimal d'unités formant colonies par gramme de levain (log(ufc)/g).

Le taux de bactéries lactiques mésophiles a été déterminé selon la norme de référence NF ISO 15214 (indice de classement V 08-030), méthode de référence, de la manière suivante :
L'ensemencement se fait en surface sur gélose MRS (Biokar (marque de fabrique)) préalablement coulée dans des boîtes de pétri avec une quantité déterminée de suspension mère et/ou des dilutions décimales de l'échantillon. Le dénombrement s'effectue après incubation des boîtes en anaérobiose à 30°C pendant 72 à 120 heures. Le résultat est exprimé en logarithme décimal d'unités formant colonies par gramme de levain (log(ufc)/g).

Les mesures de pousse à 5 h et à 6 h ont été déterminées à l'aide d'un mesureur de pousse Bühler constitué d'une éprouvette graduée de 1 à 7, de 0,2 par 0,2 mm, conforme à la norme NF X03-716. A la fin du pétrissage, 20 g de pâte à pain sont prélevés et placés dans le mesureur Bühler de manière à avoir une surface plane. Le volume de pousse est relevé toutes les heures jusqu'à 6h de pousse.

Le volume des pains (en cm³) est déterminé avec un volumètre Chopin. Le poids des pains est mesuré avec une balance Mettler Toledo^{®} modèle VIPER SW 6. Le volume massique est le rapport entre le volume et le poids du pain, il est exprimé en cm3/g.

Le levain, une fois produit, peut être utilisé en l'état, ou stocké en froid positif ou négatif, ou déshydraté par tout procédé qui permet d'éliminer l'eau en gardant les microorganismes vivants comme par exemple la lyophilisation ou toute autre technique ou il peut être entretenu autant de fois que nécessaire, afin de conserver l'écosystème dans un état actif et de propager ainsi la fermentation et de conserver les caractéristiques du levain.

Le levain peut être utilisé pour produire toutes les pates nécessitant une fermentation comme du pain et toutes ses variantes, campagne, céréale, tradition, maïs, baguette etc., pain de mie, buns et dérivés, des viennoiseries, des brioches, des croissants, du panettone et leurs variantes, de la pâte à pizza. Ces pâtes peuvent être notamment :
- des pâtes levées ou pâtes pétries :
   - pâte à brioche,
   - pâte à pain,
   - pâte à savarin,
   - pâte à baba,
   - Panettone
- des pâtes levées feuilletées :
   - pâte à croissant ou pâte tournée,
   - pâte levée feuilletée danoise,
- des pâtes battues :
   - pâte à madeleine,
   - pâte à génoise,
   - pâte à pain de Gênes,
   - pâte à biscuit,
   - pâte à cake,
- autres :
   - pâte à beignet,
   - pâte à crêpe,
   - la pâte tournée est la base des cakes.

Le pain au levain (répondant au décret pain 1993) obtenu a un goût typique de fermentation, il a une croûte épaisse, dorée et croustillante.

Le pain normal (c'est-à-dire du pain non obtenu par la recette de pain au levain) a une croûte fine et dorée, il est croustillant et il présente un goût peu prononcé. Le levain suivant l'invention représente de 5 à 40%, et de préférence de 10 à 15%, du poids de la farine utilisée pour fabriquer du pain normal. Pour du pain au levain, le levain perfectionné suivant l'invention représente de 0,5 à 5%, et de préférence de 1 à 3%, du poids de la farine (substrat) à faible taux de cendres utilisée pour fabriquer du pain au levain.

La brioche a elle aussi une croûte fine, dorée et brillante, une mie légère et fondante, des arômes lactés de beurre et de crème, sans goût acide.

Le levain permet aussi de produire du panettone respectant la législation Italienne sur ce produit ayant les caractéristiques sensorielles et organoleptiques typiques de ce produit.

Le procédé suivant l'invention peut se dérouler suivant les étapes suivantes :
Etape 1 : Nettoyer la matrice fermentescible avec de l'eau (tout type d'eau) à une température comprise entre 10 et 30°C. Le nettoyage peut être effectué : 1/ en plaçant la matrice fermentescible dans un récipient, puis en l'immergeant dans l'eau (recouvrir complètement la matrice avec l'eau), puis en l'égouttant grâce à un tamis, une écumoire ou une passoire (renverser le récipient de manière à vider l'eau, tout en récupérant la matrice fermentescible) ou 2/ en plaçant la matrice fermentescible dans un récipient perforé (passoire, tamis, écumoire, etc.) ou en la tenant à la main, puis en faisant couler de l'eau sur la matrice (tout type d'eau, n'importe quel débit d'eau) de manière à ce que l'eau rince la matrice, puis s'écoule immédiatement.
   L'objectif de cette étape est d'éliminer les impuretés de la matrice fermentescible. L'opération de nettoyage doit être répétée jusqu'à l'obtention d'une eau de rinçage limpide (translucide), c'est-à-dire que l'eau qui s'écoule lors de l'égouttage (cas 1) ou du post rinçage (cas 2) doit être identique à l'eau propre servant à nettoyer.
Etape 2 : Egoutter la matrice qui a été nettoyée en la plaçant dans un récipient perforé pour laisser l'eau s'égoutter naturellement ou en l'essorant avec tout système permettant de séparer l'eau de la matrice.
Etape 3 : Immerger la matrice fermentescible égouttée dans de l'eau (tout type d'eau) à une température comprise entre 10 et 35°C. Ajouter l'eau de manière à immerger la matrice au minimum à moitié de la hauteur/du volume qu'elle occupe dans le récipient et au maximum, de préférence jusqu'à dix fois la quantité de matrice utilisée (exemple : pour 2 Kg de matrice, on peut ajouter jusqu'à 20 Kg d'eau).
   Il est possible de ne pas ajouter d'eau à cette étape. Suite à l'égouttage de l'étape 2, la matrice est mise dans un récipient, puis on passe à l'étape 4. L'eau résiduelle absorbée par les grains suffit à initier un processus de fermentation. La quantité d'eau résiduelle doit être comprise entre 200 g et 1,5 Kg (au-delà, on est en immersion, le cas ci-dessus).
Etape 4 : Incuber cette matrice nettoyée entre 15 et 35°C pendant 18 à 168 h, de préférence entre 20 et 30°C et mieux à 25°C, de préférence de 24 h à 5 jours et mieux de 48 à 72 h.

A l'issue de l'incubation, si la matrice incubée est immergée, vérifier la présence de plusieurs bulles à la surface du liquide. Cela signifie que la fermentation de la matière fermentescible est effective et que le liquide (dit jus) contient une microflore composée à minima de levures et de bactéries lactiques.

Si la matrice incubée n'a pas été immergée, passer directement à l'étape 5.

Etape 5 : Récupérer uniquement la phase liquide (dit jus) à l'aide de tout équipement qui permet de séparer la partie liquide de la partie solide d'une matrice. Par exemple, pour séparer la phase liquide de la phase solide (et récupérer les deux phases séparément), il est possible de filtrer avec une porosité supérieure à 100 µm (dans ce cas), de centrifuger, de presser, de décanter.

Il est possible de passer directement de l'étape 5 à l'étape 9. Toutefois, il est préférable d'effectuer les étapes intermédiaires 6 à 8, car elles permettent d'établir un écosystème stable composé de bactéries lactiques et de levures. Si l'on passe directement à l'étape 9, il est préconisé d'appliquer une aération modérée de manière à ne pas défavoriser la flore lactique composée de bactéries anaérobies, ce qui risquerait de déséquilibrer l'écosystème.

Etape 6 : Placer le jus dans un récipient (tout type de récipient répondant aux normes alimentaires) de tout type de forme, de taille et de matériau.

Ensuite, mélanger ce jus à du substrat. Le substrat peut être de la farine ou toute autre fraction de céréales ou pseudo-céréales ou légumineuses. Le mélange peut être réalisé à l'aide de tout moyen ou équipement, manuel ou mécanique, qui permet d'obtenir un mélange homogène (homogène : le nombre d'agglomérats/agrégats n'excédera pas 50% en poids du mélange). La matière sèche (MS) du mélange réalisé doit être comprise entre 15 et 60% en poids, de préférence entre 40 et 50% et mieux entre 42 et 46%.

Puis, laisser fermenter 12 à 72 h, de préférence entre 18 et 48 h et mieux entre 22 et 28 h, entre 9 et 30°C de préférence entre 15 et 27°C et mieux entre 23 et 26°C, sans agitation ou avec agitation (tout type de système/équipement d'agitation, agitation permanente ou discontinue, à vitesse faible comprise entre 30 et 150 tours à la minute pour empêcher la décantation).

Etape 7 : Placer le mélange obtenu à l'issue de l'étape 6 dans un récipient (tout type de récipient répondant aux normes alimentaires) de tout type de forme, de taille et de matériau.

Effectuer un renouvellement du milieu en lui ajoutant du substrat et de l'eau (tout type d'eau) à une température comprise entre 10 et 35°C, de manière à ce que cet apport (substrat + eau) représente entre 25 et 75%, de préférence entre 33 et 60% et mieux entre 33 et 50%, du volume final. Le mélange peut être réalisé à l'aide de tout moyen ou équipement, manuel ou mécanique, qui permet d'obtenir un mélange homogène (homogène : le nombre d'agglomérats/agrégats ne doit pas excéder 50% en poids du mélange). La MS du mélange final doit être comprise entre 15 et 60% en poids, de préférence entre 40 et 50% et mieux entre 42 et 46%.

Puis, laisser fermenter 12 à 168 h, de préférence entre 18 et 72 h et mieux entre 24 et 48 h, entre 9 et 30°C, de préférence entre 15 et 27°C et mieux entre 23 et 26°C, sans agitation ou avec agitation (tout type de système/équipement d'agitation, agitation permanente ou discontinue, à 30 à 150 tours à la minute pour empêcher la décantation).

Etape 8 : Idem à l'étape 7.

Etape 9 : Placer le milieu obtenu à l'issue de l'étape 8 dans un récipient (tout type de récipient répondant aux normes alimentaires) de tout type de forme, de taille et de matériau.

Effectuer un renouvellement du milieu en lui ajoutant du substrat et de l'eau (tout type d'eau) à une température comprise entre 1 et 35°C, de préférence entre 1 et 15°C, de manière à ce que cet apport (substrat + eau) représente entre 25 et 75%, de préférence entre 33 et 66% et mieux 50% du volume final. Le mélange peut être réalisé à l'aide de tout moyen ou équipement, manuel ou mécanique, qui permet d'obtenir un mélange homogène (homogène : le nombre d'agglomérats/agrégats ne doit pas excéder 50% en poids du mélange). La MS du mélange final doit être comprise entre 15 et 60% en poids, de préférence entre 40 et 50% et mieux entre 42 et 46%.

Mettre ensuite le mélange sous agitation à l'aide de tout type de système/équipement d'agitation, l'agitation peut être permanente ou discontinue, à n'importe quelle vitesse et avec injection d'air ou d'oxygène à l'aide de tout type d'équipement ou de technologie permettant d'injecter de l'air, de l'oxygène ou un mélange de gaz contenant de l'oxygène. De préférence, l'injection d'air se fait par le dessous. De l'air (sec déshuilé de préférence) peut être injecté dans un sparger en fond de cuve à une pression, par exemple de 8,5 bar, et un débit variant de 0,01 m³/h/kg de mélange à 10 m³/h/kg de mélange selon sa consistance, de préférence avec un débit compris entre 0,01 et 1 m³/h/kg de mélange.

Laisser fermenter dans ces conditions d'agitation et d'aération et sous une température comprise entre 9 et 30°C, de préférence entre 9 et 17°C et mieux entre 10 et 15°C, pendant 12 h à 10 jours, de préférence entre 3 et 8 jours et mieux entre 6 et 8 jours.

L'injection d'air ou l'injection d'oxygène, ainsi que la température et le temps de fermentation, sont réglés de manière à obtenir, à l'issue de cette étape, de préférence un taux de levures minimum de 10⁷ ufc/g de produit.

Cette manière de procéder permet de favoriser le développement de la flore levures par rapport aux bactéries lactiques. Au regard de la plage de température annoncée, plus la température est élevée, plus le temps de fermentation sera réduit (et vice-versa).

On peut s'arrêter à l'issue de cette étape (9), toutefois il est préférable de réaliser les étapes suivantes.

Etape 10 : Placer le milieu obtenu à l'issue de l'étape 9 dans un récipient (tout type de récipient répondant aux normes alimentaires) de tout type de forme, de taille et de matériau.

Effectuer un renouvellement du milieu en lui ajoutant du substrat et de l'eau (tout type d'eau) à une température comprise entre 1 et 35°C, de préférence entre 1 et 15°C, de manière à ce que cet apport (substrat + eau) représente entre 25 et 75% du volume final, de préférence entre 33 et 66% et mieux 50%. Le mélange peut être réalisé à l'aide de tout moyen ou équipement, manuel ou mécanique, qui permet d'obtenir un mélange homogène (homogène : le nombre d'agglomérats/agrégats ne doit pas excéder 50% en poids du mélange). La MS du mélange final doit être comprise entre 15 et 60% en poids, de préférence entre 40 et 50% et mieux entre 42 et 46%.

Mettre ensuite le milieu sous agitation à l'aide de tout type de système/équipement d'agitation, l'agitation peut être permanente ou discontinue, à n'importe quelle vitesse.

Laisser fermenter dans ces conditions d'agitation et d'aération et sous une température comprise entre 9 et 30°C, de préférence entre 9 et 17°C et mieux entre 10 et 15°C, pendant 16 à 72 h, de préférence entre 36 et 72 h et mieux pendant 48 h.

Etape 11 : Idem à l'étape 10.

L'objectif des étapes 9, 10 et 11 est de favoriser le développement de la flore levures et, d'une manière générale, de permettre l'installation de l'écosystème microbien et des caractéristiques physico-chimiques du levain, en obtenant le levain suivant l'invention, mais non perfectionné.

Etape 12 : Pour produire un levain perfectionné, qui convient et à la fabrication d'un pain normal et à la fabrication d'un pain au levain, on prendra, de préférence, dans les étapes précédentes les valeurs les plus préférées et on ajoutera l'étape 12, qui reprend l'étape 11, sauf que la MS du mélange final sera comprise entre 30 et 60%, de préférence entre 40 et 53%, notamment entre 45 et 50%, et l'étape 12 pourra être répétée au moins trois fois. Cette répétition est favorable à la production du levain perfectionné.

Enfin, pour produire le levain perfectionné, il convient que le substrat (farine) ait un taux de cendres >0,75% de préférence entre 0,75 et 1% en poids (pourcentage ramené à la matière sèche de la farine). Le taux de cendres est mesuré par incinération selon la norme NF EN ISO 2171 sur 5 g +/- 0,1 mg de farine pesés précisément. Le résultat est exprimé en pourcentage en masse par rapport à la matière sèche.

A l'issue de cette étape, on obtient le levain perfectionné suivant l'invention.

Les exemples suivants illustrent l'invention.

### Exemple 1 :

6 kg de grains de blé ont été pesés dans un seau en PP pour contact alimentaire (PP signifie polypropylène).

30 litres d'eau du robinet à 15°C ont été ajoutés, puis repos pendant 30 min à température ambiante.

Lavage des grains de blé : Les grains immergés dans l'eau ont ensuite été frottés par friction avec les mains pendant 10 min, puis l'eau est évacuée. 30 litres d'eau du robinet à 15°C sont de nouveau ajoutés, puis les grains à nouveau frottés par friction avec les mains (cette opération est renouvelée cinq fois successivement).

Rinçage des grains de blé : 30 litres d'eau du robinet à 25°C sont versés sur les grains de blé, puis les grains sont égouttés par pressage manuel à travers un chinois conique en inox. L'eau est alors jetée, tandis que les grains sont conservés (cette opération est renouvelée quinze fois successivement).

Dernier égouttage des grains par pressage manuel à travers un chinois conique en inox. Seuls les grains sont conservés.

Les 6 kg de grains de blé lavés et égouttés sont placés dans un seau en PP pour contact alimentaire.

24 kg d'eau du robinet à 25°C sont ajoutés.

Le seau est placé dans une étuve à 25°C pendant 67 h.

La préparation est égouttée par pressage manuel à travers un chinois conique en inox de manière à séparer la phase liquide (jus) des grains. Seule la phase liquide est conservée.

13 kg de jus sont pesés et introduits dans un fermenteur en inox.

13 kg de farine de blé sont ajoutés.

L'homogénéisation du mélange est réalisée avec un agitateur rotor-stator à 1 500 tours/min pendant 10 min.

La préparation est maintenue à 25°C pendant 24 h.

### La MS de la préparation fermentée était de 47,5% et la température de 25°C

24 kg de préparation sont conservés.

6 kg de farine de blé et 6 kg d'eau du robinet à 25°C sont ajoutés.

L'homogénéisation du mélange est réalisée avec un rotor-stator à 1 500 tours/min pendant 10 min.

La préparation est maintenue à 25°C pendant 24 h.

### La MS de la préparation fermentée était de 42,5% et la température de 24,9°C

30 kg de préparation sont conservés.

2,94 kg de farine de blé et 12,06 kg d'eau du robinet à 25°C sont ajoutés.

L'homogénéisation du mélange est réalisée avec un agitateur rotor-stator à 1 500 tours/min pendant 10 min.

La préparation est ensuite maintenue à 25°C pendant 48h.

*La MS de la préparation fermentée était de 34,4%* et *la température de 26,8°C.*

40 kg de la préparation sont conservés.

16,3 kg de farine de blé et 23,7 kg d'eau du robinet préalablement refroidie à 6°C sont ajoutés.

L'homogénéisation du mélange est réalisée avec un agitateur rotor-stator à 1500 tours/min pendant 15 minutes.

La préparation est ensuite mise en fermentation à 15°C pendant 96h, avec une agitation centrale à 250rpm et contra-rotatif (racleur) à 30rpm et sous aération continue en injectant de l'air sec comprimé déshuilé par un sparger en fond de cuve à une pression de 6 bar et débit de 100 Nl/min (Nl/min : air détendu à l'Atmosphère Normale de Référence).

La MS de la préparation fermentée était de 33,51%.

40 kg de préparation sont conservés.

16,6 kg de farine de blé et 23,4 kg d'eau du robinet préalablement refroidie à 6°C sont ajoutés.

L'homogénéisation du mélange est réalisée avec un agitateur rotor-stator à 1500 tours/min pendant 15 minutes.

La préparation est ensuite mise en fermentation à 15°C pendant 24h, avec une agitation centrale à 250rpm et contra-rotatif (racleur) à 30rpm et sous aération continue en injectant de l'air sec comprimé déshuilé par un sparger en fond de cuve à une pression de 6 bar et débit de 100 Nl/min.

La MS de la préparation fermentée était de 34,85%, la température de 16,2°C.

40 kg de préparation sont conservés.

16,1 kg de farine de blé et 23,9 kg d'eau du robinet préalablement refroidie à 6°C sont ajoutés.

L'homogénéisation du mélange est réalisée avec un agitateur rotor-stator à 1500 tours/min pendant 15 minutes.

La préparation est ensuite mise en fermentation à 15°C pendant 24h, avec une agitation centrale à 250rpm et contra-rotatif (racleur) à 30 rpm et sous aération continue en injectant de l'air sec comprimé déshuilé par un sparger en fond de cuve à une pression de 6 bar et débit de 100N1/min.

La MS de la préparation fermentée était de 34,09%, la température de 17,3°C.

40 kg de préparation sont conservés.

16,1 kg de farine de blé et 23,9 kg d'eau du robinet préalablement refroidie à 6°C sont ajoutés.

L'homogénéisation du mélange est réalisée avec un agitateur rotor-stator à 1500 tours/min pendant 15 minutes.

La préparation est ensuite mise en fermentation à 15°C pendant 96h, avec une agitation centrale à 250rpm et contra-rotatif (racleur) à 30rpm et sous aération continue en injectant de l'air sec comprimé déshuilé par un sparger en fond de cuve à une pression de 6 bar et débit de 100N1/min.

La MS de la préparation fermentée était de 35,8%, la température de 17,3°C.

La préparation est refroidie à 4°C et conservée à 4°C.

Ce levain sera utilisé ultérieurement pour les applications pain, brioche, panettone dont on présente les résultats.

### Exemple comparatif 1 :

1 kg de grains de blé a été pesé dans un seau en PP pour contact alimentaire.

5 litres d'eau du robinet à 15°C ont été ajoutés, puis repos pendant 30 min à température ambiante.

Lavage des grains de blé : Les grains immergés dans l'eau ont ensuite été frottés par friction avec les mains pendant 10 min, puis l'eau est évacuée. 5 litres d'eau du robinet à 15°C sont de nouveau ajoutés, puis les grains à nouveau frottés par friction avec les mains (cette opération est renouvelée cinq fois successivement).

Rinçage des grains de blé : 5 litres d'eau du robinet à 25°C sont versés sur les grains de blé, puis les grains sont égouttés par pressage manuel à travers un chinois conique en inox. L'eau est alors jetée, tandis que les grains sont conservés (cette opération est renouvelée quinze fois successivement).

Dernier égouttage des grains par pressage manuel à travers un chinois conique en inox. Seuls les grains sont conservés.

Le kilo de grains de blé lavés et égouttés sont placés dans un seau en PP pour contact alimentaire.

4 kg d'eau du robinet à 25°C sont ajoutés.

Le seau est placé dans une étuve à 25°C pendant 67 h.

La préparation est égouttée par pressage manuel à travers un chinois conique en inox de manière à séparer la phase liquide (jus) des grains. Seule la phase liquide est conservée.

1 750 g de jus sont pesés dans un seau en PP pour contact alimentaire.

1 750 g de farine de blé sont ajoutés.

L'homogénéisation du mélange est réalisée manuellement avec un fouet de cuisine pendant 5 min.

La préparation est ensuite placée dans une étuve à 25°C pendant 24 h.

### La MS de la préparation fermentée était de 47,5% et la température de 25°C

3 300 g de préparation sont pesés dans un seau en PP pour contact alimentaire.

825 g de farine de blé et 825 g d'eau du robinet à 25°C sont ajoutés.

L'homogénéisation du mélange est réalisée manuellement avec un fouet de cuisine pendant 5 min.

La préparation est ensuite placée dans une étuve à 25°C pendant 24 h.

### La MS de la préparation fermentée était de 42,5% et la température de 24,9°C

4 800 g de préparation sont pesés dans un seau en PP pour contact alimentaire.

470 g de farine de blé et 1 930 g d'eau du robinet à 25°C sont ajoutés.

L'homogénéisation du mélange est réalisée manuellement avec un fouet de cuisine pendant 5 min.

La préparation est ensuite placée dans une étuve à 25°C pendant 48 h.

### La MS de la préparation fermentée était de 34,4% et la température de 26,8°C

500 g de préparation sont pesés dans un seau en PP pour contact alimentaire.

650 g de blé (pas d'eau ajoutée).

L'homogénéisation du mélange est réalisée à l'aide d'un robot Kitchenaid 5KSM45 avec batteur plat, en vitesse 1 pendant 2 min.

La préparation est ensuite placée dans une étuve à 15°C pendant 96 h.

### La MS de la préparation fermentée était de 65,44%

500 g de préparation sont pesés dans un seau en PP pour contact alimentaire.

425 g de farine de blé et 75 g d'eau du robinet préalablement refroidie à 6°C sont ajoutés.

L'homogénéisation du mélange est réalisée à l'aide d'un robot Kitchenaid 5KSM45 avec batteur plat, en vitesse 1 pendant 2 min.

La préparation est ensuite placée dans une étuve à 15°C pendant 24 h.

### La MS de la préparation fermentée était de 70,26% et la température de 15,2°C

500 g de préparation sont pesés dans un seau en PP pour contact alimentaire.

400 g de farine de blé et 100 g d'eau du robinet préalablement refroidie à 6°C sont ajoutés.

### La MS de la préparation fermentée était de 47,5% et la température de 25°C.

L'homogénéisation du mélange est réalisée à l'aide d'un robot Kitchenaid 5KSM45 avec batteur plat, en vitesse 1 pendant 2 min.

La préparation est ensuite placée dans une étuve à 15°C pendant 24 h.

*La MS de la préparation fermentée était de 71,14%, la température de 15,4°C.*

500 g de préparation sont pesés dans un seau en PP pour contact alimentaire.

400 g de farine de blé et 100 g d'eau du robinet préalablement refroidie à 6°C sont ajoutés.

L'homogénéisation du mélange est réalisée à l'aide d'un robot Kitenchaid 5KSM45 avec batteur plat, en vitesse 1 pendant 2 minutes.

La préparation est ensuite placée dans une étuve à 15°C pendant 96h.

*La MS de la préparation fermentée était de 70,9%, la température de 14,6°C.*

La préparation est placée en enceinte climatique à 4°C pour être refroidie et conservée à 4°C.

Ce levain sera utilisé ultérieurement pour les applications pain, brioche, panettone.

### Exemple comparatif 2 :

1 kg de grains de blé ont été pesés dans un seau en PP pour contact alimentaire.

5 litres d'eau du robinet à 15°C ont été ajoutés, puis repos pendant 30 min à température ambiante.

Lavage des grains de blé : Les grains immergés dans l'eau ont ensuite été frottés par friction avec les mains pendant 10 min, puis l'eau est évacuée. 5 litres d'eau du robinet à 15°C sont de nouveau ajoutés, puis les grains à nouveau frottés par friction avec les mains (cette opération est renouvelée cinq fois successivement).

Rinçage des grains de blé : 5 litres d'eau du robinet à 25°C sont versés sur les grains de blé, puis les grains sont égouttés par pressage manuel à travers un chinois conique en inox. L'eau est alors jetée, tandis que les grains sont conservés (cette opération est renouvelée quinze fois successivement).

Dernier égouttage des grains par pressage manuel à travers un chinois conique en inox. Seuls les grains sont conservés.

Le kilo de grains de blé lavés et égouttés sont placés dans un seau en PP pour contact alimentaire.

4 kg d'eau du robinet à 25°C sont ajoutés.

Le seau est placé dans une étuve à 25°C pendant 67 h.

La préparation est égouttée par pressage manuel à travers un chinois conique en inox de manière à séparer la phase liquide (jus) des grains. Seule la phase liquide est conservée.

1 750 g de jus sont pesés dans un seau en PP pour contact alimentaire.

1 750 g de farine de blé sont ajoutés.

L'homogénéisation du mélange est réalisée manuellement avec un fouet de cuisine pendant 5 min.

La préparation est ensuite placée dans une étuve à 25°C pendant 24 h.

### La MS de la préparation fermentée était de 43,2% et la température de 25°C

3 300 g de préparation sont pesés dans un seau en PP pour contact alimentaire.

829 g de farine de blé et 825 g d'eau du robinet à 25°C sont ajoutés.

L'homogénéisation du mélange est réalisée manuellement avec un fouet de cuisine pendant 5 min.

La préparation est ensuite placée dans une étuve à 25°C pendant 24 h.

### La MS de la préparation fermentée était de 43,9% et la température de 25°C

4 800 g de préparation sont pesés dans un seau en PP pour contact alimentaire.

1 200 g de farine de blé et 1 200 g d'eau du robinet à 25°C sont ajoutés.

L'homogénéisation du mélange est réalisée manuellement avec un fouet de cuisine pendant 5 min.

La préparation est ensuite placée dans une étuve à 25°C pendant 48 h.

### La MS de la préparation fermentée était de 42,7% et la température de 26,2 °C

1 000 g de préparation sont pesés dans un seau en PP pour contact alimentaire.

311,66 g de farine de blé et 593,33 g d'eau du robinet à 25°C sont ajoutés.

L'homogénéisation du mélange est réalisée manuellement avec un fouet de cuisine pendant 5 min.

La préparation est ensuite placée dans une étuve à 25°C pendant 96 h.

### La MS de la préparation fermentée était de 33,3%

1 000 g de préparation sont pesés dans un seau en PP pour contact alimentaire.

420 g de farine de blé et 580 g d'eau du robinet à 25°C sont ajoutés.

L'homogénéisation du mélange est réalisée manuellement avec un fouet de cuisine pendant 5 min.

La préparation est ensuite placée dans une étuve à 25°C pendant 24 h.

### La MS de la préparation fermentée était de 34,99% et la température de 25°C

1 000 g de préparation sont pesés dans un seau en PP pour contact alimentaire.

400 g de farine de blé et 600 g d'eau du robinet à 25°C sont ajoutés.

L'homogénéisation du mélange est réalisée manuellement avec un fouet de cuisine pendant 5 min.

La préparation est ensuite placée dans une étuve à 25°C pendant 24 h.

*La MS de la préparation fermentée était de 34,53%, la température de 24,8°C.*

1000 g de préparation sont pesés dans un seau en PP pour contact alimentaire.

400 g de farine de blé et 600 g d'eau du robinet à 25°C sont ajoutés.

L'homogénéisation du mélange est réalisée manuellement avec un fouet de cuisine pendant 5 minutes.

La préparation est ensuite placée dans une étuve à 25°C pendant 96h.

*La MS de la préparation fermentée était de 34,30%, et la température de 25,1°C.*

La préparation est placée en enceinte climatique à 4°C pour être refroidie et conservée à 4°C.

Ce levain sera utilisé ultérieurement pour les applications pain, brioche, panettone.

### Exemple comparatif 3 :

1,5 kg de grains de blé ont été pesés dans un seau en PP pour contact alimentaire.

5 litres d'eau du robinet à 15°C ont été ajoutés, puis repos pendant 30 min à température ambiante.

Lavage des grains de blé : Les grains immergés dans l'eau ont ensuite été frottés par friction avec les mains pendant 10 min, puis l'eau est évacuée. 5 litres d'eau du robinet à 15°C sont de nouveau ajoutés, puis les grains à nouveau frottés par friction avec les mains (cette opération est renouvelée cinq fois successivement).

Rinçage des grains de blé : 5 litres d'eau du robinet à 25°C sont versés sur les grains de blé, puis les grains sont égouttés par pressage manuel à travers un chinois conique en inox. L'eau est alors jetée, tandis que les grains sont conservés (cette opération est renouvelée quinze fois successivement).

Dernier égouttage des grains par pressage manuel à travers un chinois conique en inox. Seuls les grains sont conservés.

Les 1,5 kg de grains de blé lavés et égouttés sont placés dans un seau en PP pour contact alimentaire.

6 kg d'eau du robinet à 25°C sont ajoutés.

Le seau est placé dans une étuve à 25°C pendant 67 h.

La préparation est égouttée par pressage manuel à travers un chinois conique en inox de manière à séparer la phase liquide (jus) des grains. Seule la phase liquide est conservée.

5 000 g de jus sont pesés dans un seau en PP pour contact alimentaire.

5 000 g de farine de blé sont ajoutés.

L'homogénéisation du mélange est réalisée manuellement avec un fouet de cuisine pendant 5 min.

La préparation est ensuite placée dans une étuve à 25°C pendant 24 h.

### La MS de la préparation fermentée était de 44,8% et la température de 26,1°C

4 500 g de préparation sont pesés dans un seau en PP pour contact alimentaire.

1 125 g de farine de blé et 1 125 g d'eau du robinet à 25°C sont ajoutés.

L'homogénéisation du mélange est réalisée manuellement avec un fouet de cuisine pendant 5 min.

La préparation est ensuite placée dans une étuve à 25°C pendant 24 h.

4 000 g de préparation sont pesés dans un seau en PP pour contact alimentaire.

1 000 g de farine de blé et 1 000 g d'eau du robinet à 25°C sont ajoutés.

L'homogénéisation du mélange est réalisée manuellement avec un fouet de cuisine pendant 5 min.

La préparation est ensuite placée dans une étuve à 25°C pendant 48 h.

### La MS de la préparation fermentée était de 44,6% et la température de 25,6°C

2 000 g de préparation sont pesés dans un seau en PP pour contact alimentaire.

600 g de farine de blé et 1 400 g d'eau du robinet préalablement refroidie à 6°C sont ajoutés.

L'homogénéisation du mélange est réalisée manuellement avec un fouet de cuisine pendant 5 min.

La préparation est ensuite placée dans une étuve à 8°C pendant 96 h.

### La MS de la préparation fermentée était de 35,18% et la température de 8,2°C

2 000 g de préparation sont pesés dans un seau en PP pour contact alimentaire.

800 g de farine de blé et 1 200 g d'eau du robinet préalablement refroidie à 6°C sont ajoutés.

L'homogénéisation du mélange est réalisée manuellement avec un fouet de cuisine pendant 5 min.

La préparation est ensuite placée dans une étuve à 8°C pendant 24 h.

### La MS de la préparation fermentée était de 35,1% et la température de 7,8°C

2 000 g de préparation sont pesés dans un seau en PP pour contact alimentaire.

800 g de farine de blé et 1 200 g d'eau du robinet préalablement refroidie à 6°C sont ajoutés.

L'homogénéisation du mélange est réalisée manuellement avec un fouet de cuisine pendant 5 min.

La préparation est ensuite placée dans une étuve à 8°C pendant 24 h.

### La MS de la préparation fermentée était de 35,06%, la température de 8,2°C.

2000 g de préparation sont pesés dans un seau en PP pour contact alimentaire.

800 g de farine de blé et 1200 g d'eau du robinet préalablement refroidie à 6°C sont ajoutés.

L'homogénéisation du mélange est réalisée manuellement avec un fouet de cuisine pendant 5 minutes.

La préparation est ensuite placée dans une étuve à 8°C pendant 24h.

*La MS de la préparation fermentée était de 35,42%, la température de 8°C.*

2000 g de préparation sont pesés dans un seau en PP pour contact alimentaire.

800 g de farine de blé et 1200 g d'eau du robinet préalablement refroidie à 6°C sont ajoutés.

L'homogénéisation du mélange est réalisée manuellement avec un fouet de cuisine pendant 5 minutes.

La préparation est ensuite placée dans une étuve à 8°C pendant 24h.

*La MS de la préparation fermentée était de 36,64%, la température de 8,2°C.*

La préparation est placée en enceinte climatique à 4°C pour être refroidie et conservée à 4°C.

Ce levain sera utilisé ultérieurement pour les applications pain, brioche, panettone.

Pour obtenir les résultats du tableau I, on a produit du pain, de la brioche et du panettone par les procédés suivants respectivement en utilisant le pétrin à spirale VMISPI11.

Vitesse 1 : 70 t/min pour le bras ; 10 t/min pour la cuve.

Vitesse 2 : 160 t/min pour le bras; 18 t/min pour la cuve.

### Procédé de fabrication du pain ordinaire par le levain sans ajout de levure de boulanger de l'exemple 1 et des exemples comparatifs 1, 2, 3, 4 et 5

**Tableau I**

| **Ordre des étapes à respecter** | Type de farine | Farine de tradition française |
|---|---|---|
| **1** | Poids de l'eau | La quantité d'eau apportée est ajustée selon la consistance du levain (plus ou moins liquide) de manière à obtenir des pâtes de consistances équivalentes pour une fermentation optimale. |
| | | exemple 1 : 1275 g sont introduits dans le pétrin |
| | | exemple comparatif 1 : 1425g |
| | | exemple comparatif 2 : 1275g |
| | | exemple comparatif 3 : 1275 g |
| | | exemple comparatif 4 : 1200g |
| | | exemple comparatif 5 : 1200g |
| **2** | Poids de la farine | 2 000 g sont introduits dans le pétrin |
| **3** | Poids du levain | 200 g sont introduits dans le pétrin |
| **4** | Pétrissage | Pétrin spirale 5 min en 1^{ère} vitesse, puis 3 min en 2^{ème} vitesse |
| **5** | Poids du sel | 40 g sont introduits dans le pétrin |
| **6** | Pétrissage | 3 min en 2^{ème} vitesse |
| **7** | T° de la pâte en sortie du pétrissage | 25-27°C |
| **8** | Pointage | 1 h en chambre de fermentation à 25°C et hygrométrie de 75% |
| **9** | Division | Division manuelle en pâtons de 350 g et préformage en boules ovales |
| **10** | Détente | 20 min en chambre de fermentation à 25°C et hygrométrie de 75% |
| **11** | Façonnage | Format bâtard ou baguette avec soudure dessous |
| **12** | Apprêt | 4 à 5 h en chambre de fermentation à 25°C et hygrométrie de 75% |
| **13** | Cuisson | 20 min à 240°C avec injection de buée à l'enfournement |

### Procédé de fabrication de brioche, sans ajout de levure de boulanger, par le levain de l'exemple 1 et des exemples comparatifs 1, 2, 3, 4

**Tableau II**

| **Ordre des étapes à respecter** | Mélange de farines | Farine de tradition française + améliorant Phil froid + farine de gruau |
|---|---|---|
| **1** | Poids de l'œuf | La quantité d'oeuf apportée est ajustée selon la consistance du levain (plus ou moins liquide) de manière à obtenir des pâtes de consistances équivalentes pour une fermentation optimale. |
| | | exemple 1 : 900 g sont introduits dans le pétrin |
| | | exemple comparatif 1 : 1050g |
| | | exemple comparatif 2 : 900g |
| | | exemple comparatif 3 : 900 g |
| | | exemple comparatif 4 : 700g |
| **2** | Poids du sucre | 300 g sont introduits dans le pétrin |
| **3** | Poids du sel | 30 g sont introduits dans le pétrin |
| **4** | Poids des farines | 990 g de farine de tradition + 10 g de Phil froid + 500 g de farine de gruau sont introduits dans le pétrin |
| **5** | Poids du levain | 300 g sont introduits dans le pétrin |
| **6** | Pétrissage | Pétrin spirale 5 min en 1^{ère} vitesse, puis 15 min en 2^{ème} vitesse |
| **7** | Poids du beurre | 600 g sont introduits dans le pétrin |
| **8** | Pétrissage | Pétrin spirale 5 min en 1^{ère} vitesse, puis 7 min en 2^{ème} vitesse |
| **9** | T° de la pâte en sortie du pétrissage | 25-28°C |
| **10** | Pointage | 1 h 30 en chambre de fermentation à 25°C et hygrométrie de 75% |
| **11** | Division | Division manuelle en pâtons de 300 g et préformage en boules ovales |
| **12** | Détente | 15 min en chambre de fermentation à 25°C et hygrométrie de 75% |
| **13** | Façonnage | En moules en carton |
| **14** | Pousse | 16 h en chambre de fermentation à 22°C et hygrométrie de 75% |
| **15** | Cuisson | 18 min à 160°C avec injection de buée à l'enfournement, four ventilé |

### Procédé de fabrication de panettone, sans ajout de levure de boulanger, par le levain de l'exemple 1 et des exemples comparatifs 1, 2 et 4

**Tableau III**

| **Ordre des étapes à respecter** | Type de farine | Mix panettone |
|---|---|---|
| **1** | Poids de l'eau | La quantité d'eau apportée est ajustée selon la consistance du levain (plus ou moins liquide) de manière à obtenir des pâtes de consistances équivalentes pour une fermentation optimale. |
| | | exemple 1 : 450 g sont introduits dans le pétrin |
| | | exemple comparatif 1 : 550g |
| | | exemple comparatif 2 : 450g |
| | | exemple comparatif 4 : 375g |
| **2** | Poids de la farine | 1 000 g de mix panettone |
| **3** | Poids du levain | 200 g sont introduits dans le pétrin |
| **4** | Pétrissage | Pétrin spirale 5 min en 1^{ère} vitesse, puis 10 min en 2^{ème} vitesse |
| **5** | Poids du beurre | 300 g sont introduits dans le pétrin |
| **6** | Pétrissage | Pétrin spirale 5 min en 1^{ère} vitesse |
| **7** | Poids des fruits | 460 g sont introduits dans le pétrin |
| **8** | Pétrissage | Pétrin spirale 1 min en 1^{ère} vitesse |
| **9** | T° de la pâte en sortie du pétrissage | 24-26°C |
| **10** | Pointage | 1 h 30 en chambre de fermentation à 25°C et hygrométrie de 75% |
| **11** | Division | Division manuelle en pâtons de 700 g et préformage en boules ovales |
| **12** | Détente | 20 min en chambre de fermentation à 25°C et hygrométrie de 75% |
| **13** | Façonnage | Manuel en boules |
| **14** | Pousse | 16 h en chambre de fermentation à 24°C et hygrométrie de 75% |
| **15** | Cuisson | 45 min à 150°C avec injection de buée à l'enfournement, four ventilé |

### Procédé de fabrication du pain au levain par le levain de l'exemple comparatif 6

**Tableau IV**

| **Ordre des étapes à respecter** | Type de farine | farine de tradition française + farine de seigle T170 |
|---|---|---|
| **1** | Poids de l'eau | La quantité d'eau apportée est ajustée selon la consistance du levain (plus ou moins liquide) de manière à obtenir des pâtes de consistances équivalentes pour une fermentation optimale. |
| | | 1180g d'eau sont introduits dans le pétrin si utilisation de levain de l'invention |
| | | 1100g pour le levain du commerce |
| **2** | Poids du sel | 36 g sont introduits dans le pétrin |
| **3** | Poids de la farine | 1800 g de farine de tradition française + 200g de farine de seigle T170 sont introduits dans le pétrin |
| **4** | Poids du levain | Pour le levain suivant l'invention : 20 g sont introduits dans le pétrin |
| | | Pour le levain du commerce : 100g sont introduits dans le pétrin |
| **5** | Pétrissage | Pétrin spirale |
| | | 5 min en 1^{ère} vitesse, puis 30 secondes en 2^{ème} vitesse |
| **6** | T° de la pâte en sortie du pétrissage | 25-27°C |
| **7** | Pointage | 14 h en chambre de fermentation à 23°C et hygrométrie de 75% |
| **8** | Division | division manuelle en pâtons de 1000g et 350g, préformage en boules ovales |
| **9** | Détente | 20 min en chambre de fermentation à 25°C et hygrométrie de 75% |
| **10** | Façonnage | En boule |
| **11** | Apprêt | 3 h en chambre de fermentation à 25°C et hygrométrie de 75% |
| **12** | Cuisson | 50 min à 230°C/240°C avec injection de buée à l'enfournement |

### Exemples comparatifs 4 et 5 :

On a préparé du pain selon la recette du tableau I avec deux levains du commerce revendiquant l'obtention de pain sans ajout de levure. On a obtenu les résultats indiqués dans le tableau V.

### Exemple comparatif 6 :

On a préparé du pain au levain avec 1% en poids sur le poids de farine d'un levain suivant l'invention et 5% en poids sur le poids de farine d'un levain du commerce revendiquant l'obtention de pain au levain sans ajout de levure. On a obtenu des résultats conformes à la législation française (décret N° 93-1074 du 13 septembre 1993).

**TABLEAU V**

| | | | | | | | | **Mesure faite uniquement sur une pâte à pain** | | | | | **Résul tats** | **Volumes massiques des pains** | | |
|---|---|---|---|---|---|---|---|---|---|---|---|---|---|---|---|---|
| | **MS** | **pH** | **ATT** | **Acide acéti que** | **Acide lacti que** | **Levures log (ufc) /g** | **Bactéries lactiques log (ufc) /g** | **Volu me Pous se 2h** | **Volu me Pous se 3h** | **Volu me Pous se 4h** | **Volu me Pous se 5h** | **Volu me Pous se 6h** | | **Pain** | **Brio che** | **Panet , tone** |
| **Exemple 1** | 35,8 | 5,89 | 2 | 87 | 0 | 8,81 | 9,60 | 1,5 | 1,8 | 2,4 | 3 | 3,5 | Succès | 3,93 | 5,09 | 3,87 |
| **Exemple comparatif 1** | 70, 9 | 4,03 | 9,5 | 1 032 | 5 640 | 6,89 | 8,59 | 1 | 1 | 1,1 | 1,3 | 1,5 | Echec | 2, 67 | 3,55 | 3, 09 |
| **Exemple comparatif 2** | 34,3 | 3,56 | 14 | 734 | 7 662 | 5,90 | 9, 08 | 1,1 | 1,2 | 1,4 | 1,5 | 1,6 | Echec | 1,89 | 1,06 | 1,76 |
| **Exemple comparatif 3** | 36, 64 | 4,34 | 5,2 | 305 | 2 942 | 4,85 | 8,56 | 1 | 1 | 1 | 1 | 1 | Echec | 1, 86 | 1,45 | - |
| **Exemple comparatif 4** | 16, 65 | 4,21 | 22, 4 | 6 452 | 17 809 | 7,11 | 8,20 | 1,2 | 1,2 | 1,2 | 1,2 | - | Echec | 2,14 | 1,96 | 2,18 |
| **Exemple Comparatif 5** | 29,21 | 3,75 | 14, 1 | 2327 | 2925 | 5,76 | 7, 52 | 1 | 1 | 1 | 1 | - | Echec | 1,94 | - | - |

| | | | | | | | | | | | | | | | | |
|---|---|---|---|---|---|---|---|---|---|---|---|---|---|---|---|---|
| Unités des paramètres :MS : % Acide acétique : ppm Acide lactique : ppm Levures : log (ufc)/g Bactéries lactiques : log (ufc)/g Volume massique : cm³/g | | | | | | | | | | | | | | | | |

### Exemple comparatif 7 (insufflation d'air trop précoce) :

On procède comme ci-dessous :

**TABLEAU VI (1/2)**

| | | |
|---|---|---|
| **J0** | Etape 1 | 10 Kg de grains de blé issus de l'agriculture biologique ont été pesés dans un seau en PP pour contact alimentaire. |
| | | 30 litres d'eau du robinet à 15°C ont été ajoutés, puis repos de 30 min à température ambiante. |
| | | Lavage des grains de blé : les grains immergés dans l'eau ont ensuite été frottés par friction avec les mains pendant 10 min, puis l'eau est évacuée. |
| | | 30 litres d'eau du robinet à 15°C sont de nouveau ajoutés, puis les grains à nouveau frottés par friction avec les mains. Cette opération est renouvelée 5 fois successivement. |
| | | Rinçage des grains de blé : 30 litres d'eau du robinet à 25°C sont versés sur les grains de blé, puis les grains sont égouttés par pressage manuel à travers un chinois conique en inox. L'eau est alors jetée, tandis que les grains sont conservés. Cette opération est renouvelée 15 fois successivement. |
| | Etape 2 | Dernier égouttage des grains par pressage manuel à travers un chinois conique en inox. Seuls les grains sont conservés. |
| | Etape 3 | Les 10 kg de grains de blé bio lavés et égouttés sont introduits dans un fermenteur en inox Goavec (marque de fabrique). 40 Kg d'eau du robinet à 25°C sont ajoutés. |
| | Etape 4 | La préparation est maintenue à 25°C pendant 72 h. |
| | | La préparation est mise sous une agitation centrale à 150 rpm et contra-rotatif (racleur) à 30 rpm et sous aération continue en injectant de l'air sec comprimé déshuilé par un sparger en fond de cuve à une pression de 6 bar et un débit de 60 Nl/min. |
| | | (Nl/min : air détendu à l'Atmosphère Normale de Référence). |
| **J3** | Etape 5 | *La température de la préparation est de 26,4°C.* |
| | | La préparation est évacuée du fermenteur inox (jus + grains). Seule la phase liquide (jus) est conservée. |
| | Etape 6 | 30 Kg de jus sont pesés et introduits dans un fermenteur en inox Goavec (marque de fabrique). 30 Kg de farine de blé T80 sont ajoutés. |
| | | L'homogénéisation du mélange est réalisée avec un agitateur rotor-stator à 1 500 tours/min pendant 10 min. La préparation est maintenue à 25°C pendant 24 h. |
| | | La préparation est mise sous une agitation centrale à 150 rpm et contra-rotatif (racleur) à 50 rpm et sous aération continue en injectant de l'air sec comprimé déshuilé par un sparger en fond de cuve à une pression de 6 bar et un débit de 60 Nl/min. |
| **J4** | Etape 7 | *La MS* de *la préparation fermentée est de 45,25% et la température est de 25,64°C.* 39,6 Kg de préparation sont conservés. |
| | | 9,9 Kg de farine de blé T80 et 9,9 Kg d'eau du robinet à 25°C sont ajoutés. |
| | | L'homogénéisation du mélange est réalisée avec un agitateur rotor-stator à 1 500 tours/min pendant 10 min. La préparation est ensuite maintenue à 25°C pendant 24 h. |
| | | La préparation est mise sous une agitation centrale à 150 rpm et contra-rotatif (racleur) à 50 rpm et sous aération continue en injectant de l'air sec comprimé déshuilé par un sparger en fond de cuve à une pression de 6 bar et un débit de 60 Nl/min. |

**TABLEAU VI (2/2)**

| | | |
|---|---|---|
| **J5** | Etape 8 | *La MS de la préparation fermentée est de 45,02% et la température est de 26°C.* |
| | | 40 Kg de préparation sont conservés. |
| | | 3,918 Kg de farine de blé T80 et 16,1 Kg d'eau du robinet à 25°C sont ajoutés. |
| | | L'homogénéisation du mélange est réalisée avec un agitateur rotor-stator à 1 500 tours/min pendant 10 min. La préparation est ensuite maintenue à 25°C pendant 48 h. |
| | | La préparation est mise sous une agitation centrale à 200 rpm et contra-rotatif (racleur) à 50 rpm et sous aération continue en injectant de l'air sec comprimé déshuilé par un sparger en fond de cuve à une pression de 6 bar et un débit de 60 N1/min. |
| **J7** | Etape 9 | *La MS de la préparation fermentée est de 34,26% et la température est de 24,81°C.* |
| | | 24 Kg de préparation sont conservés. |
| | | 9,776 de farine de blé T80 et 14,2 Kg d'eau du robinet à 25°C sont ajoutés. |
| | | Kg L'homogénéisation du mélange est réalisée avec un agitateur rotor-stator à 1 500 tours/min pendant 15 min. |
| | | La préparation est ensuite mise en fermentation à 25°C pendant 72 h. |
| | | La préparation est mise sous une agitation centrale à 200 rpm et contra-rotatif (racleur) à 50 rpm et sous aération continue en injectant de l'air sec comprimé déshuilé par un sparger en fond de cuve à une pression de 6 bar et un débit de 60 Nl/min (Nl/min : air détendu à l'Atmosphère Normale de Référence). |
| **J10** | Etape 10 | *La MS* de *la préparation fermentée est de 33,16% et la température est de 26,64°C.* |
| | | 25 Kg de préparation sont conservés. |
| | | 10,4 Kg de farine de blé T80 et 14,6 Kg d'eau du robinet à 15°C sont ajoutés. |
| | | L'homogénéisation du mélange est réalisée avec un agitateur rotor-stator à 1 500 tours/min pendant 15 min. La préparation est ensuite mise en fermentation à 15°C pendant 96 h. |
| | | La préparation *est* mise sous une agitation centrale à 250 rpm et contra-rotatif (racleur) à 15 rpm et sous-aération continue en injectant de l'air sec comprimé déshuilé par un sparger en fond de cuve à une pression de 6 bar et un débit de 60 Nl/min. |
| **J14** | Etape 11 | *La MS de la préparation fermentée est de 37,85% et la température est de 15,37°C.* |
| | | 25 Kg de préparation sont conservés. |
| | | 10 Kg de farine de blé T80 et 15 Kg d'eau du robinet à 15°C sont ajoutés. |
| | | L'homogénéisation du mélange est réalisée avec un agitateur rotor-stator à 1 500 tours/min pendant 15 min. La préparation est ensuite mise en fermentation à 15°C pendant 24 h. |
| | | La préparation est mise sous une agitation centrale à 250 rpm et contra-rotatif (racleur) à 15 rpm et sous aération continue en injectant de l'air sec comprimé déshuilé par un sparger en fond de cuve à une pression de 6 bar et un débit de 60 N1/min. |
| **J15** | Arrêt fermenta tion | *La température de la préparation est de 16°C.* |
| | | La préparation est refroidie à 4°C et conservée à 4°C. |
| | | Ce levain est testé pour des applications sur des pain, brioche, panettone et pain au levain. |

### Exemple comparatif 8 (levain perfectionné) :

On procède comme ci-dessous :

**TABLEAU VII (1/3)**

| | | |
|---|---|---|
| **J0** | Etape 1 | 6 Kg de grains de blé issus de l'agriculture biologique ont été pesés dans un seau en PP pour contact alimentaire. |
| | | 30 litres du robinet à 15°C ont été ajoutés, puis repos de 30 min à température ambiante. |
| | | Lavage des grains de blé : les grains immergés dans l'eau ont ensuite été frottés par friction avec les mains pendant 10 min, puis l'eau est évacuée. 30 litres d'eau du robinet à 15°C sont de nouveau ajoutés, puis les grains à nouveau frottés par friction avec les mains. Cette opération est renouvelée 5 fois successivement. |
| | | Rinçage des grains de blé : 30 litres d'eau du robinet à 25°C sont versés sur les grains de blé, puis les grains sont égouttés par pressage manuel à travers un chinois conique en inox. L'eau est alors jetée, tandis que les grains sont conservés. Cette opération est renouvelée 15 fois successivement. |
| | Etape 2 | Dernier égouttage des grains par pressage manuel à travers un chinois conique en inox. Seuls les grains sont conservés. |
| | Etape 3 | Les 6 Kg de grains de blé bio lavés et égouttés sont placés dans un seau en PP pour contact alimentaire. |
| | | 24 Kg d'eau du robinet à 25°C sont ajoutés. |
| | Etape 4 | Le seau est placé dans une étuve à 25°C pendant 67 h. |
| **J3** | Etape 5 | La préparation est égouttée par pressage manuel à travers un chinois conique en inox de manière à séparer la phase liquide (jus) des grains. Seule la phase liquide est conservée. |
| | Etape 6 | 20 Kg de jus sont pesés et introduits dans un fermenteur en inox Goavec (marque de fabrique). 20 Kg de farine de blé T80 sont ajoutés. |
| | | L'homogénéisation du mélange est réalisée avec un agitateur rotor-stator à 1 500 tous/min pendant 10 min. |
| | | La préparation est maintenue à 25°C pendant 24 h sous agitation faible centrale à 80 rpm et contra-rotatif (racleur) à 15 rpm. |
| **J4** | Etape 7 | *La MS de la préparation fermentée est de 43,7% et la température est de 24,9°C.* |
| | | 40 Kg de préparation sont conservés. |
| | | 10 Kg de farine de blé T80 et 10 Kg d'eau du robinet à 25°C sont ajoutés. |
| | | L'homogénéisation du mélange est réalisée avec un agitateur rotor-stator à 1 500 tours/min pendant 10 min. |
| | | La préparation est ensuite maintenue à 25°C pendant 24 h sous agitation faible centrale à 80 rpm et contra-rotatif (racleur) à 15 rpm. |
| **J5** | Etape 8 | *La MS de la préparation fermentée est de 43,2% et la température est de 25,8°C.* |
| | | 40 Kg de préparation sont conservés. |
| | | 10 Kg de farine de blé T80 et 10 Kg d'eau du robinet à 25°C sont ajoutés. |
| | | L'homogénéisation du mélange est réalisée avec un agitateur rotor-stator à 1 500 tours/min pendant 10 min. La préparation est ensuite maintenue à 25°C pendant 48 h sous agitation faible centrale à 80 rpm et contra-rotatif (racleur) à 15 rpm. |

**TABLEAU VII (2/3)**

| | | |
|---|---|---|
| **J7** | Etape 9 | *La MS de la préparation fermentée est de 42,3% et la température est de 25,5°C.* |
| | | 30 Kg de préparation sont conservés. |
| | | 15 Kg de farine de blé T80 et 15 Kg d'eau du robinet préalablement refroidie à 6°C sont ajoutés. |
| | | L'homogénéisation du mélange est réalisée avec un agitateur rotor-stator à 1 500 tours/min pendant 15 min. |
| | | La préparation est ensuite mise en fermentation à 11°C pendant 7 jours avec une agitation centrale 250 rpm et contra-rotatif (racleur) à 30 rpm et sous aération continue en injectant de l'air sec comprimé déshuilé par un sparger en fond de cuve à une pression de 6 bar et un débit de 100 Nl/min (Nl/min : air détendu à l'Atmosphère Normale de Référence). |
| **J14** | Etape 10 | *La MS de la préparation fermentée est de 41,8% et la température est de 11,5°C.* |
| | | 30 Kg de préparation sont conservés. |
| | | 14,8 Kg de farine de blé T80 et 15,2 Kg d'eau du robinet préalablement refroidie à 6°C sont ajoutés. |
| | | L'homogénéisation du mélange est réalisée avec un agitateur rotor-stator à 1 500 tours/min pendant 15 min. |
| | | La préparation est ensuite mise en fermentation à 11°C pendant 48 h avec une agitation centrale à 250 rpm et contra-rotatif (racleur) à 30 rpm et sous aération continue en injectant de l'air sec comprimé déshuilé par un sparger en fond de cuve à une pression de 6 bar et un débit de 100 Nl/min. |
| **J16** | Etape 11 | *La MS de la préparation fermentée est* de *42,1% et la température est de 12,5°C.* |
| | | 30 Kg de préparation sont conservés. |
| | | 14,8 Kg de farine de blé T80 et 15,2 Kg d'eau du robinet préalablement refroidie à 6°C sont ajoutés. |
| | | L'homogénéisation du mélange est réalisée avec un agitateur rotor-stator à 1 500 tours/min pendant 15 min. |
| | | La préparation est ensuite mise en fermentation à 11°C pendant 48 h avec une agitation centrale à 250 rpm et contra-rotatif (racleur) à 30 rpm et sous aération continue en injectant de l'air sec comprimé déshuilé par un sparger en fond de cuve à une pression de 6 bar et un débit de 100 Nl/min. |
| **J18** | Etape 12 | *La MS de la préparation fermentée est de 41,1% et la température est de 11,6°C.* |
| | | 30 Kg de *préparation* sont conservés. |
| | | 17,7 Kg de farine de blé T80 et 12,3 Kg d'eau du robinet préalablement refroidie à 6°C sont ajoutés. |
| | | L'homogénéisation du mélange est réalisée avec un agitateur rotor-stator à 1 500 tours/min pendant 15 min. |
| | | La préparation est ensuite mise en fermentation à 11°C pendant 48 h avec une agitation centrale à 250 rpm et contra-rotatif (racleur) à 30 rpm et sous aération continue en injectant de l'air sec comprimé déshuilé par un sparger en fond de cuve à une pression de 6 bar et un débit de 100 Nl/min. |
| **J20** | Etape 13 (On répète L'étape 12) | *La MS de la préparation fermentée est de 45,6% et la température est de 14,5°C.* |
| | | 30 Kg de préparation sont conservés. |
| | | 17,3 Kg de farine de blé T80 et 12,7 Kg d'eau du robinet préalablement refroidie à 6°C sont ajoutés. |
| | | L'homogénéisation du mélange est réalisée avec un agitateur rotor-stator à 1 500 tours/min pendant 15 min. |
| | | La préparation est ensuite mise en fermentation à 11°C pendant 48 h avec une agitation centrale à 250 rpn et contra-rotatif (racleur) à 30 rpm et sous aération continue en injectant de l'air sec comprimé déshuile par un sparger en fond de cuve à une pression de 6 bar et un débit de 100 Nl/min. |

**TABLEAU VII (3/3)**

| | | |
|---|---|---|
| **J22** | Etape 14 (On répète l'étape 13) | *La MS de la préparation fermentée est de 45,9% et la température est de 13,4°C.* |
| | | 30 Kg de préparation sont conservés. |
| | | 17,3 Kg de farine de blé T80 et 12,7 Kg d'eau du robinet préalablement refroidie à 6°C sont ajoutés. L'homogénéisation du mélange est réalisée avec un agitateur rotor-stator à 1 500 tours/min pendant 15 min. |
| | | La préparation est ensuite mise en fermentation à 11°C pendant 48 h avec une agitation centrale à 250 rpm et contra-rotatif (racleur) à 30 rpm et sous aération continue en injectant de l'air sec comprimé déshuilé par un sparger en fond de cuve à une pression de 6 bar et un débit de 100 Nl/min. |
| **J24** | Etape 15 (On répète l'étape 13) | *La MS de la préparation fermentée est de 46,7% et la température est de 13,6°C.* |
| | | 30 Kg de préparation sont conservés. |
| | | 17,3 Kg de farine de blé T80 et 12,7 Kg d'eau du robinet préalablement refroidie à 6°C sont ajoutés. L'homogénéisation du mélange est réalisée avec un agitateur rotor-stator à 1 500 tours/min pendant 15 min. |
| | | La préparation est ensuite mise en fermentation à 11°C pendant 48 h avec une agitation centrale à 250 rpm et contra-rotatif (racleur) à 30 rpm et sous aération continue en injectant de l'air sec comprimé déshuilé par un sparger en fond de cuve à une pression de 6 bar et un débit de 100 Nl/min. |
| **J2 6** | Etape 16 (On répète l'étape 13) | *La MS de la préparation fermentée est de 46,6% et la température est de 13,3°C.* |
| | | 30 Kg de préparation sont conservés. |
| | | 17,3 Kg de farine de blé T80 et 12,7 Kg d'eau du robinet préalablement refroidie à 6°C sont ajoutés. L'homogénéisation du mélange est réalisée avec un agitateur rotor-stator à 1 500 tours/min pendant 15 min. |
| | | La préparation est ensuite mise en fermentation à 11°C pendant 48 h avec une agitation centrale à 250 rpm et contra-rotatif (racleur) à 30 rpm et sous aération continue en injectant de l'air sec comprimé déshuilé par un sparger en fond de cuve à une pression de 6 bar et un débit de 100 Nl/min. |
| **J28** | Etape 17 (On répète l'étape 13) | *La MS de la préparation fermentée est de 47,1% et la température est de 13°C.* |
| | | 30 Kg de préparation sont conservés. |
| | | 17,3 Kg de farine de blé T80 et 12,7 Kg d'eau du robinet préalablement refroidie à 6°C sont ajoutés. L'homogénéisation du mélange est réalisée avec un agitateur rotor-stator à 1 500 tours/min pendant 15 min. |
| | | La préparation est ensuite mise en fermentation à 11°C pendant 48 h avec une agitation centrale à 250 rpm et contra-rotatif (racleur) à 30 rpm et sous aération continue en injectant de l'air sec comprimé déshuilé par un sparger en fond de cuve à une pression de 6 bar et un débit de 100 Nl/min. |
| **J30** | Arrêt de fermentation | *La MS de la préparation fermentée est de 47,1% et la température est de 13,9°C.* |
| | | La préparation est refroidie à 4°C et conservée à 44°C. |
| | | Ce levain est testé pour des applications sur des pain, brioche, panettone et pain au levain. |

**TABLEAU VIII**

| | | | |
|---|---|---|---|
| **Ordre des étapes à respecter** | | Type de farine | Farine de tradition française + farine de seigle T170 |
| | | Température de base | 65°C |
| | 1 | Poids en eau | La quantité d'eau apportée est ajustée selon la consistance du levain (plus ou moins liquide) de manière à obtenir des pâtes de consistances équivalentes pour une fermentation optimale. |
| | | | Exemple D2 isara j+15 : 1 140 g |
| | | | Exemple Spicher v3 : 1 140 g |
| | | | Exemple suivant l'invention, perfectionné : 1 140 g |
| | 2 | Poids en sel | 36 g sont introduits dans le pétrin |
| | 3 | Poids en farine | 1 800 g de farine de tradition française + 200 g de farine de seigle T170 sont introduits dans le pétrin |
| | 4 | Poids en levain | 40 g sont introduits dans le pétrin |
| | 5 | Pétrissage | Pétrin spirale 5 min en 1^{ère} vitesse, puis 30 secondes en 2^{ème} vitesse |
| | 6 | Température de la pâte en sortie du pétrissage | 25 à 27°C |
| | 7 | Pointage | 14 h en chambre de fermentation à 23°C et hygrométrie de 75% |
| | 8 | Division | Division manuelle en pâtons de 1 000 et 350 g, préformage en boules ovales |
| | 9 | Détente | 20 min en chambre de fermentation à 25°C et hygrométrie de 75% |
| | 10 | Façonnage | En boule |
| | 11 | Apprêt | 3 h en chambre de fermentation à 25°C et hygrométrie de 75% |
| | 12 | Cuisson | 50 min à 230/240°C avec injection de buée à l'enfournement pour des pâtons de 1 Kg et 25 min pour des pâtons de 350 g. |

On effectue le test de production de pain au levain suivant le protocole opératoire indiqué au tableau VIII avec les levains "Spicher", celui de l'exemple comparatif 7 et celui de l'exemple comparatif 8.

Les résultats obtenus sont regroupés dans le tableau IX.

**TABLEAU IX**

| | | | | | | | | **Mesures faites uniquement sur de la pâte à pain** | | | | | **Volumes massiques en cm³/g** | | | | **Application pour du pain. au levain** | |
|---|---|---|---|---|---|---|---|---|---|---|---|---|---|---|---|---|---|---|
| | **MS** | **pH** | **ATT** | **Acétat es** | **Lactat es** | **Levure log (ufc) / g** | **Bactéries Lactiques Log (ufc) /g** | Pous se à 2 h | Pous se à 3 h | Pous se à 4 h | Pous se à 5 h | Pous se à 6 h | Pain | Brioche | Panet tone | Pain au levain | pH du pain | Acétate du pain (ppm) |
| **Exemple comparatif 7** | 34, 96 | 3,74 | 12,7 | 2 517 | 4 206 | 9,23 | 9, 40 | 1,2 | 1,6 | 1,8 | 2 | 2,2 | 2,81 | 3, 86 | 2, 83 | 1,85 | 3, 91 | 650 |
| **Spicher*** | 43, 16 | 3, 93 | 15,3 | 819 | 6 904 | 7,48 | 8,64 | 1,3 | 1,3 | 1, 4 | 1, 4 | 1,7 | 2,88 | 2,26 | 2,52 | 2,50 | 4,02 | 148 |
| **Exemple comparatif 8** | 47, 24 | 3,92 | 11,1 | 425 | 5 334 | 7, 64 | 9,30 | 1,4 | 1,6 | 2 | 2,2 | 3 | 4,30 | 4,79 | 2, 69 | 2,48 | 3, 92 | 910 |

| | | | | | | | | | | | | | | | | | | |
|---|---|---|---|---|---|---|---|---|---|---|---|---|---|---|---|---|---|---|
| * Spicher est le levain préparé selon Spicher G ET Al "Untersuchungen zur Charakterisierung und Bewertung einer Spontansauers." Einflussder Fuehrungsbedingungen auf den Verlauf der spontanen Gaering Geheide Mehl und Brot Bochum DE vol 4 No. 12 complétée par Untersuchung zur Charakterisierung und Bewertung verschiedener Verfahren zur Bereitung eines Spontansauers 1. Mitteilung: Vergleich verschiedener Nr-5487 der Bundes Forschung Anstalt für Getreide und Kartoffelverarbeitung. Detmold p 18-122. Le levain de l'exemple comparatif 7, dans lequel on a procédé avec insufflation d'air dès le stade a), donne un taux d'acétate trop grand et des pousses à 5 h et à 6 h insuffisantes et un volume de pain insuffisant. Le levain Spicher donne des pousses à 5 h et à 6 h insuffisantes et un taux d'acétate dans le pain au levain insuffisant suivant la législation. | | | | | | | | | | | | | | | | | | |

### Mesure du pH, acétates et lactates du pain :

Lors de la fabrication du pain au levain, la production endogène d'acides organiques est évaluée sur la pâte à pain crue. L'analyse du pain au levain (cuit) est réalisée uniquement sur la mie. 25 g de mie ou de pâte sont prélevés, puis 225 ml d'eau osmosée sont ajoutés précisément. Le mélange est homogénéisé pendant 5 min à l'aide d'un ultra-turrax (IKA (marque de fabrique) DI 25 basic) à 20 000 rpm.

La mesure du pH est réalisée sur ce mélange, sous agitation, avec un pHmètre Mettler Toldeo (marque de fabrique) modèle G20.

Pour le dosage de l'acide acétique et de l'acide lactique, le mélange est préalablement centrifugé à 12 000 g pendant 20 min. Le surnageant est prélevé. L'analyse est effectuée à partir de cet échantillon par méthode enzymatique au moyen de kits D-/L-Lactic acid ENZYTECTM et acetic acid ENTYTECTM (Scil Diagnostic GmbH, Allemagne). Les résultats sont exprimés en ppm (parties par million = mg/Kg de pain ou de pâte).

**Tableau X**

| Production endogène d'acide acétique durant la production de pain au levain. | | |
|---|---|---|
| | **Levain perfectionné** | **Levain Spicher** |
| **Pour le pH** | | |
| Après pétrissage | 6,27 | 6,25 |
| Au façonnage | 4,00 | 4,12 |
| Avant cuisson | 3,89 | 4,03 |
| Mie de pain | 3,92 | 4,02 |
| Volume massique du pain au levain | 2,48 | 2,50 |

| **Pour l'acétate** | | |
|---|---|---|
| Après pétrissage | 425 | - |
| Au façonnage | 716 | 100 |
| Avant cuisson | 867 | 122 |
| Mie de pain | 910 | 148 |

| **Pour le lactate** | | |
|---|---|---|
| Après pétrissage | 808 | 785 |
| Au façonnage | 5 025 | 4 393 |
| Avant cuisson | 5 452 | 4 760 |
| Mie de pain | 5 655 | 4 786 |

Ce tableau montre le suivi pour la production d'acides endogènes durant la fabrication de pain au levain.

Il y a production endogène des deux acides majoritaires du levain.

En termes d'acidité (pH et taux d'acétates du pain), seul le levain perfectionné respecte les critères légaux.

## Revendications

1. Procédé de production d'un levain, dans lequel successivement :
a) on nettoie une matrice fermentescible à l'eau en l'immergeant complètement dans de l'eau et en faisant s'écouler de l'eau jusqu'à ce que l'eau qui s'écoule soit limpide, de manière à obtenir une matrice nettoyée, ou bien contenant encore de 200 g à 1,5 Kg d'eau résiduelle par 2 Kg de matrice que l'on incube ou bien en contenant moins et, dans ce dernier cas, on immerge la matrice nettoyée dans de l'eau entre 15°C et 35°C à raison de 1 Kg à 20 Kg d'eau par 2 Kg de matrice que l'on incube, l'incubation se faisant entre 10 et 35°C jusqu'à apparition de bulles à la surface du liquide (dit jus), de manière à obtenir une matrice incubée,
b) on sépare le jus du reste de la matrice incubée,
c) on mélange le jus à du substrat pour obtenir un mélange ayant une teneur en matière sèche en poids comprise entre 15 et 60% et on laisse fermenter pendant 12 à 72 h entre 9°C et 25°C pour obtenir un milieu et
d) on ajoute au milieu du substrat et de l'eau entre 10°C et 35°C, l'apport de substrat et d'eau représentant de 25 à 75% du volume total et on laisse fermenter pendant 12 à 72 h entre 9°C et 25°C avec insufflation d'air, d'oxygène ou d'un mélange contenant de l'oxygène, à un débit compris entre 0,01 m³/h/kg de produit à 10 m³/h/kg de produit, pour obtenir du levain,
et dans lequel l'insufflation d'air ou d'oxygène n'a lieu qu'au stade d).

2. Procédé suivant la revendication 1, **caractérisé en ce que** la matrice fermentescible comprend :
- des céréales telles que blé tendre, blé dur, seigle, des pseudo-céréales telles que sarrasin, quinoa, des légumineuses, sous toutes leurs formes telles que graines entières sèches ou germées, farines, semoules et autres fractions telles que sons, germes,
- tous les fruits tels que pomme, poire, banane, et les fruits secs, entiers ou parties telles que peau, chair, pulpe, pépins, frais et transformés tels que séchés,
- bois de la vigne tels que sarment, copeaux,
- choux, houblons, malts tels que blé, orge.

3. Procédé suivant l'une des revendications précédentes, **caractérisé en ce que** le substrat comprend de la farine ou toute autre fraction de céréale ou pseudo-céréale ou légumineuse.

4. Procédé suivant l'une des revendications précédentes, **caractérisé en ce que** l'on répète au moins trois fois le stade d).

5. Procédé suivant l'une des revendications précédentes, **caractérisé en ce que** l'on fait suivre le stade d) d'un stade e), dans lequel on répète le stade d), mais avec une teneur en matière sèche allant de 30 à 60%,

6. Procédé suivant la revendication 5, **caractérisé en ce que** l'on répète le stade e) au moins trois fois.

7. Procédé suivant la revendication 5 ou 6, **caractérisé en ce que** le substrat a une teneur en cendres supérieure à 0,75% en poids.

8. Levain obtenu par le procédé selon l'une quelconque des revendications 1 à 7, ayant un pH compris entre 3 et 6, un taux d'acide acétique inférieur à 2000 ppm, un taux d'acide lactique inférieur à 8000 ppm, un taux de levures en log(ufc)/g compris entre 7 et 9, un taux de bactéries lactiques en log(ufc)/g compris entre 8 et 10 et qui, utilisé dans un test de boulangerie dans un procédé de préparation de pain selon les stades successifs suivants : on introduit dans l'ordre, dans un pétrin à spirale à bras et cuve entraînés en rotation, 1275 g d'eau, 2000 g de farine et 200 g de levain, on les pétrit pendant 5 min à une vitesse de 70 t/min du bras et de 10 t/min de la cuve, on introduit 40 g de sel dans le pétrin, on pétrit pendant 3 min à une vitesse de 160 t/min du bras et 18 t/min de la cuve, de manière à obtenir une température de la pâte en sortie de pétrissage de 25 à 27°C, on effectue un pointage de la pâte pendant 1 h en chambre de fermentation à 25°C et à une hygrométrie de 75%, on effectue une division manuelle de la pâte en pâtons de 350 g que l'on préforme en boules ovales, on détend pendant 20 min en chambre de fermentation à 25°C et à une hygrométrie de 75%, on effectue un façonnage en format bâtard ou baguette avec soudure dessus, on effectue un apprêt de 4 à 5 h en chambre de fermentation à 25°C et à une hygrométrie de 75% et enfin une cuisson pendant 20 min à 240°C avec injection de buée à l'enfournement, donne une pâte avant cuisson ayant une mesure de pousse à 5 h en cm supérieure à 2, une mesure de pousse à 6 h supérieure à 2,8, et cette pâte cuite donne un pain qui a un volume massique au moins égal à 3 cm³/g.

9. Levain suivant la revendication 8, **caractérisé en ce que** le taux d'acétate du pain est supérieur à 900 ppm et son pH inférieur à 4,3.

10. Levain suivant la revendication 8 ou 9, **caractérisé en ce qu'**il présente une acidité totale titrable inférieure à 20.

## Patentansprüche

1. Verfahren zur Herstellung eines Sauerteigs, bei dem hintereinander:
a) eine mit Wasser fermentierbare Grundsubstanz gereinigt wird, indem sie vollständig in Wasser eingetaucht wird und das Wasser ablaufen gelassen wird bis das ablaufende Wasser klar ist um so eine gereinigte Grundsubstanz zu gewinnen, oder die enthält noch 200 g bis 1,5 kg Restwasser pro 2 kg Grundsubstanz, die gären gelassen wird, oder weniger enthält, und im letzteren Fall die gereinigte Grundsubstanz in Wasser mit einer Temperatur zwischen 15°C und 35 °C in einem Verhältnis von 1 kg Wasser pro 2 kg Grundsubstanz gären gelassen wird, wobei die Gärung bei 10°C bis 35°C erfolgt bis Blasen an der Oberfläche der Flüssigkeit (dem sogenannten Saft) auftreten, um so eine gegärte Grundsubstanz zu gewinnen,
b) der Saft von der restlichen gegärten Grundsubstanz getrennt wird,
c) der Saft mit Substrat gemischt wird um eine Mischung mit einem Trockengehalt zwischen 15 % und 60 % zu gewinnen und 12 bis 72 Stunden bei 9 °C bis 25 °C fermentieren zu lassen um ein Medium zu gewinnen, und
d) in das Medium aus Substrat und Wasser bei einer Temperatur zwischen 10 °C und 35 °C eine Menge Substrat und Wasser hinzugefügt wird, die 25% bis 75 % des Gesamtvolumens ausmacht, und 12 bis 72 Stunden bei einer Temperatur zwischen 9 °C und 25 °C unter Einblasen von Luft, Sauerstoff oder einem sauerstoffhaltigen Gemisch mit einer Durchflussmenge zwischen 0,01 m³/h/kg des Produkts bis m³/h/kg des Produkts fermentieren gelassen wird, um Sauerteig zu gewinnen,
und wobei das Einblasen von Luft oder Sauerstoff erst in Schritt d) erfolgt.

2. Verfahren nach Anspruch 1, **dadurch gekennzeichnet, dass** die fermentierbare Grundsubstanz umfasst:
- Getreide, zum Beispiel Weichweizen, Hartweizen, Roggen, Pseudogetreide zum Beispiel Buchweizen, Quinoa, Hülsenfrüchte in jeder Form, zum Beispiel ganze getrocknete oder gekeimte Samen, Mehl, Grieß und andere Anteile zum Beispiel Kleie, Keime,
- Jegliche Art von Früchten wie Äpfel, Birnen, Bananen und Trockenfrüchte, ganz oder in Teilen wie Schalen, Fruchtfleisch, Kerne, frisch und verarbeitet sowie getrocknet,
- Weinreben wie Rebholz, Späne,
- Kohl, Hopfen, Malz wie Weizen, Gerste.

3. Verfahren nach einem der vorstehenden Ansprüche, **dadurch gekennzeichnet, dass** das Substrat Mehl oder einen anderen Anteil an Getreide oder Hülsenfrüchten umfasst.

4. Verfahren nach einem der vorstehenden Ansprüche, **dadurch gekennzeichnet, dass** Schritt d) mindestens dreimal wiederholt wird.

5. Verfahren nach einem der vorstehenden Ansprüche, **dadurch gekennzeichnet, dass** auf Schritt d) ein Schritt e) folgt, in dem Schritt d) wiederholt wird, jedoch mit einem Trockensubstanzgehalt von 30 bis 60 %.

6. Verfahren nach Anspruch 5, **dadurch gekennzeichnet, dass** Schritt e) mindestens dreimal wiederholt wird.

7. Verfahren nach Anspruch 5 oder 6, **dadurch gekennzeichnet, dass** das Substrat einen Aschegehalt von mehr als 0,75 Gew.-% aufweist.

8. Sauerteig, der nach einem der Verfahren gemäß den Ansprüchen 1 bis 7 hergestellt ist und aufweisend einen pH-Wert zwischen 3 und 6, einen Essigsäuregehalt von weniger als 2000 ppm, einen Milchsäuregehalt von weniger als 8000 ppm, einen Hefeanteil in log(ufc)/g zwischen 7 und 9, einen Milchsäurebakterienanteil in log(ufc)/g zwischen 8 und 10 und der in einem Backtest in einem Verfahren zur Herstellung von Brot in den folgenden aufeinanderfolgenden Schritten verwendet wird: In der angegebenen Reihenfolge werden in eine Spiralknetmaschine mit rotierendem Arm und Behälter 1275 g Wasser, 2000 g Mehl und 200 g Sauerteig gegeben, 5 Minuten lang bei einer Geschwindigkeit von 70 U/min des Arms und U/min des Behälters geknetet, 40 g Salz werden in die Knetmaschine gegeben, 3 Minuten lang wird bei einer Geschwindigkeit von 160 U/min des Arms und 18 U/min der Schüssel geknetet, so dass die Teigtemperatur am Ende des Knetvorgangs zwischen 25 und 27 °C beträgt, der Teig wird eine 1h lang in einem Gärraum bei 25 °C und einer Luftfeuchtigkeit von 75 % ruhen gelassen, der wird Teig von Hand in 350 g schwere Stücke geteilt und zu ovalen Kugeln geformt, die 20 Minuten lang in einem Gärschrank bei 25 °C und einer Luftfeuchtigkeit von 75 % ruhen gelassen und dann zu Baguettes oder Fladenbrot mit einer oben liegenden Naht geformt werden, die 4 bis 5 Stunden in einem Gärraum bei 25°C und einer Luftfeuchtigkeit von 75 % ruhen gelassen und schließlich bei 240°C mit Dampfzufuhr gebacken werden, wobei die einen Teig vor dem Backen mit einem Aufgehmaß nach 5 Stunden von mehr als 2 cm und einem Aufgehmaß nach 6 Stunden von mehr als 2,8 cm ergibt und dieser gebackene Teig ein Brot mit einem spezifischen Volumen von mindestens 3 cm³/g ergibt.

9. Sauerteig nach Anspruch 8, **dadurch gekennzeichnet, dass** der Acetatgehalt des Brotes über 900 ppm und sein pH-Wert unter 4,3 liegt.

10. Sauerteig nach Anspruch 8 oder 9, **dadurch gekennzeichnet, dass** er einen titrierbaren Gesamtsäuregehalt von weniger als 20 aufweist.

## Claims

1. Process for producing a sourdough in which the following steps take place consecutively:
a) a fermentable matrix is washed in water by completely submerging it in water and allowing the water to flow until it runs clear so as to obtain a washed matrix, which either is still containing 200 g to 1.5 kg of residual water per 2 kg of matrix to be incubated, or is containing less than this and, in the latter case, the washed matrix is submerged in water at between 15°C and 35°C at the ratio of 1 kg to 20 kg of water per 2 kg of matrix to be incubated, incubation taking place at between 10 and 35°C until bubbles appear on the surface of the liquid (known as the liquor) so as to obtain an incubated matrix,
b) the liquor is separated from the rest of the incubated matrix,
c) the liquor is mixed with substrate to obtain a mixture with a dry matter content by weight ranging between 15 and 60% and this is allowed to ferment for 12 to 72 hours at between 9°C and 25°C to obtain a medium and
d) substrate and water at between 10°C and 35°C are added to the medium, the addition of substrate and water representing 25 to 75% of the total volume, and fermentation is allowed for between 12 to 72 hours at between 9°C and 25°C while blowing with air, oxygen or a mixture containing oxygen, at a rate ranging from 0.01 m³/h/kg of product to 10 m³/h/kg of product, to obtain sourdough,
and wherein the blowing with air or oxygen takes place only in step d).

2. Process according to claim 1, **characterised in that** the fermentable matrix comprises:
- grains such as soft wheat, hard wheat, rye, pseudocereals such as buckwheat, quinoa, pulses, in all their forms such as whole dry or sprouted seeds, flours, cornmeal and other fractions such as bran or germ,
- all fruit such as apples, pears, bananas and dried fruits, either whole or in part, such as the skin, flesh, pulp, pips, both fresh and processed, such as dried,
- wood from grapevines such as stalks, chips,
- brassicas, hops, malts such as wheat, barley.

3. Process according to any one of the preceding claims, **characterised in that** the substrate comprises flour or any other grain or pseudocereal or pulse fraction.

4. Process according to any one of the preceding claims, **characterised in that** step d) is repeated at least three times.

5. Process according to any one of the previous claims, **characterised in that** step d) is followed by a step e) in which step d) is repeated, but with a dry matter content ranging from 30 to 60%.

6. Process according to claim 5, **characterised in that** step e) is repeated at least three times.

7. Process according to either claim 5 or claim 6, **characterised in that** the substrate has an ash content in excess of 0.75% by weight.

8. Sourdough obtained by a process according to any one of claims 1 to 7, having a pH of between 3 and 6, an acetic acid content of less than 2,000 ppm, a lactic acid content of less than 8,000 ppm, a yeast content in log(CFU)/g of between 7 and 9, a lactic acid bacteria content in log(CFU)/g of between 8 and 10, and which, when used in a bakery test in a bread making process based on the following consecutive steps: the following are placed in order in a spiral dough mixer with a rotating arm and bowl: 1,275 g of water, 2,000 g of flour and 200 g of sourdough, these are kneaded for 5 minutes with the arm operating at a speed of 70 rpm and the bowl operating at 10 rpm, 40 g salt is added to the mixer, this is then kneaded for three minutes with the arm operating at a speed of 160 rpm and the bowl operating at 18 rpm so as to obtain a dough temperature after the kneading process of 25 to 27°C, the dough undergoes a first fermentation for one hour in a fermentation chamber at 25°C with a relative humidity of 75%, the dough is manually divided into pieces weighing 350 g, which are pre-formed into oval balls, which are allowed to rest for 20 minutes in a fermentation chamber at 25°C with a relative humidity of 75%, they are then shaped into a baguette or short baguette (bâtard) with the seam on top, after which a second fermentation process is carried out for 4 to 5 hours in the fermentation chamber at 25°C with a relative humidity of 75%, and finally the bread is cooked for 20 minutes at 240°C with steam injected when placed in the oven, gives a dough prior to baking with a growth measurement in cm in excess of 2 after five hours, a growth measurement in excess of 2.8 after six hours, and this cooked dough gives a bread with a specific volume at least equal to 3 cm³/g.

9. Sourdough according to claim 8, **characterised in that** the acetate content of the bread is preferably in excess of 900 ppm and its pH is less than 4.3.

10. Sourdough according to claim 8 or 9, **characterised in that** it has a total titratable acidity of less than 20.
